# EUROPÄISCHE PATENTSCHRIFT

(11) **EP 1 231 102 B1**
(45) Veröffentlichungstag und Bekanntmachung des Hinweises auf die Patenterteilung: **13.09.2006**
(21) Anmeldenummer: 01130676.8
(22) Anmeldetag: 21.12.2001
(51) Int. Cl.: B60N 2/36

(54) **Verriegelungsvorrichtung mit Doppelkopf zum gegenseitigen Verriegeln von einzeln klappbaren Rückenlehnen**
Locking device with dual headed bolt for reciprocal locking of individualy tiltable backrests
Dispositif de verrouillage avec pène à deux têtes pour le verrouillage réciproque de dossiers rabattables individuellement

(30) Priorität: 07.02.2001 DE 10105501
(43) Veröffentlichungstag der Anmeldung: 14.08.2002
(73) Patentinhaber: ADAM OPEL AG, 65423 Rüsselsheim (DE)
(72) Erfinder: Lohmann, Horst, 59846 Sundern (DE); Richard, Jochen, 57368 Lennestadt Saalhausen (DE); Leuchtmann, Andrew, 55595 Mandel (DE)

(56) Entgegenhaltungen:
- EP-A- 0 854 063
- DE-A- 19 637 620
- DE-A- 19 839 743
- DE-A- 19 926 524
- DE-C- 19 846 633

## Beschreibung

Die vorliegende Erfindung betrifft eine Vorrichtung zum gegenseitigen Verriegeln zweier einzeln klappbarer Rückenlehnen von Kraftfahrzeugsitzen gemäß dem Oberbegriff des Anspruchs 1.

In der Praxis finden sich vielfach Kraftfahrzeuge, bei denen die Rückenlehne beispielsweise der hinteren Sitzreihe in zwei einzelne Rückenlehnen aufgeteilt ist. Jede einzelne Rückenlehne kann getrennt von der anderen umgeklappt werden, um hierdurch zusätzlichen Laderaum im Kraftfahrzeug zu schaffen. Bei normalem Fahrbetrieb befinden sich beide Rückenlehen in ihren im wesentlichen vertikalen Positionen. In diesen Positionen werden sie mit Hilfe einer Verriegelungsvorrichtung form- und kraftschlüssig miteinander verbunden.

Eine hierzu verwendete Verriegelungsvorrichtung der eingangs genannten Art ist aus dem deutschen Patent 198 46 633 bekannt. Diese Verriegelungsvorrichtung weist eine Rasteinrichtung auf, die eine Betätigungseinheit und eine durch die Betätigungseinheit betätigbare Rastelement-Trägereinheit in Form eines Bolzens mit einem an dessen stirnseitigen Ende vorgesehenen Hammerkopf aufweist und die an einer der beiden Rückenlehnen angebracht ist. An der anderen Rückenlehne befindet sich ein Gegenrastelement, das durch eine Beschlagplatte mit einer die Form des Hammerkopfes aufweisenden Öffnung gebildet ist. Zum Verriegeln der beiden Rückenlehnen miteinander wird der Bolzen mit dem Hammerkopf aus einer Entriegelungsposition in eine Verriegelungsposition gebracht, indem der Hammerkopf durch die Öffnung der Beschlagplatte hindurchgeführt und anschließend um 90° verschwenkt wird. Hierdurch gelangt der Hammerkopf in Verriegelungseingriff mit der Beschlagplatte.

Bei dieser in der Praxis gut bewährten Verriegelungsvorrichtung wirken im Falle eines Crashs Kräfte sowohl auf den Bolzen und die Beschlagplatte als auch auf die Betätigungseinheit ein, die in einem Gehäuse aus Druckguss untergebracht ist. Da die Kraftübertragung bei einem Crash von dem Bolzen über die Betätigungseinheit auf das Gehäuse und von dem Gehäuse auf die Anschraubpunkte erfolgt, werden hierbei Teile, wie insbesondere die Betätigungseinheit mit Kräften beaufschlagt, die zur Übertragung derartig großer Kräfte nicht optimal ausgelegt werden können. Darüberhinaus ist das aus Druckguss bestehende Gehäuse ebenfalls nicht zur Übertragung von großen Kräften geeignet.

Es ist Aufgabe der vorliegenden Erfindung, eine Verriegelungsvorrichtung der eingangs genannten Art zu schaffen, bei der Kräfte im Falle eines Crashs lediglich über die Rasteinrichtung übertragen werden.

Die vorstehende Aufgabe wird durch die Merkmale des Anspruchs 1 gelöst. In den sich daran anschließenden Ansprüchen 2 bis 16 finden sich vorteilhafte Ausgestaltungen hierzu.

Durch die Rasteinrichtung mit einem zweiten Rastelement, das beim Verriegeln in Eingriff mit einem zweiten Gegenrastelement gelangt, welches an der die Rasteinrichtung tragenden Rückenlehne montierbar ist, wird sichergestellt, dass im Falle eines Crashs Kräfte nahezu ausschließlich auf die Rastelement-Trägereinheit und die Gegenrastelemente einwirken. Damit kann gegebenenfalls eine Betätigungseinheit, die beispielsweise durch einen Elektromotor oder einen Elektromagneten gebildet sein kann, von einer Beanspruchung ausgenommen werden.

Für die Anordnung der Eingriffspaarungen aus erstem Rastelement und erstem Gegenrastelement sowie aus zweitem Rastelement und zweitem Gegenrastelement können unterschiedliche Lösungen vorgesehen sein, solange sichergestellt ist, dass eine Eingriffspaarung an jeweils einer der beiden Rückenlehnen vorhanden ist. Als besonders vorteilhaft hat es sich erwiesen, wenn die beiden Eingriffspaarungen so angeordnet sind, dass sie im verriegelten Zustand voneinander wegweisen.

Eine spielfreie Verriegelung kann hierbei dadurch erreicht werden, dass das erste Rastelement und das zweite Rastelement in Richtung der Längsachse der Rasteinrichtung einen Abstand zueinander aufweisen, der dem Anbringungsabstand des ersten Gegenrastelements zu dem zweiten Gegenrastelement entspricht. Erfolgt die Anordnung der Eingriffspaarungen aus erstem Rastelement und erstem Gegenrastelement sowie aus zweitem Rastelement und zweitem Gegenrastelement in der Weise, dass diese voneinander wegweisen, ist dieser Abstand noch um die Dicke eines der beiden Gegenrastelemente größer.

Für die Rasteinrichtung hat es sich als vorteilhaft erwiesen, wenn diese eine Rastelement-Trägereinheit und eine Betätigungseinheit aufweist. Hierbei kann die Rastelement-Trägereinheit durch einen vorzugsweise kreiszylindrischen Bolzen gebildet sein, der mit der Betätigungseinheit in Wirkverbindung steht und der an seinem Stirnende das erste Rastelement und an einem Längsabschnitt das zweite Rastelement trägt.

Die Betätigungseinheit kann weiterhin ein Antriebsmittel aufweisen, mittels dem die Rastelement-Trägereinheit zusammen mit den Rastelementen aus der Entriegelungsposition in die Verriegelungsposition reversibel bewegbar ist. Hierbei kann das Antriebsmittel sowohl durch ein von Hand zu betätigendes Element oder eine entsprechende Federeinrichtung als auch durch einen Elektromotor oder einen Elektromagneten gebildet sein.

Zum Verriegeln der erfindungsgemäßen Verriegelungsvorrichtung hat es sich als vorteilhaft erwiesen, wenn die Rastelement-Trägereinheit so mit dem Antriebsmittel in Wirkverbindung steht, dass für die Rastelement-Trägereinheit zur Erreichung der Verriegelungsposition zunächst eine Bewegung in Richtung ihrer Längsachse und anschließend eine Bewegung um mindestens 90° um ihre Längsachse ausführbar ist. Zum Erreichen der Entriegelungsposition erfolgt eine Bewegung in umgekehrter Reihenfolge. Jedoch besteht auch die Möglichkeit, die Rastelement-Trägereinheit nicht in eine zur Erreichung der Verriegelungsposition entgegengesetzte Richtung zu drehen, sondern in die gleiche Richtung, wobei dies insbesondere dann vorteilhaft ist, wenn die Rastelemente symmetrisch aufgebaut sind.

Die Rastelemente selbst können ebenfalls wiederum ganz unterschiedlich ausgebildet sein. Es ist hierbei von Vorteil, wenn das erste und/oder das zweite Rastelement eine erste Rastfläche aufweist, die beim Verriegeln mit mindestens einer an dem ersten und/oder dem zweiten Gegenrastelement vorgesehenen Gegenrastfläche in Eingriff bringbar ist.

Zur Verbesserung des Eingriffskontaktes zwischen dem jeweiligen Rastelement und dem Gegenrastelement ist es weiterhin von Vorteil, wenn das erste und/oder das zweite Rastelement eine zweite Rastfläche aufweist, die beim Verriegeln mit mindestens einer an dem ersten und/oder zweiten Gegenrastelement vorgesehenen zweiten Gegenrastfläche in Eingriff bringbar ist. Hierbei hat es sich als vorteilhaft erwiesen, wenn sich die erste und/oder die zweite Rastfläche in einem Winkel von zumindest annähernd 90° zu der Längsachse der Rasteinrichtung erstrecken.

Weiterhin hat es sich als vorteilhaft erwiesen, wenn die erste und/oder die zweite Rastfläche des ersten und/oder des zweiten Rastelements in einer senkrecht zur Längsachse der Rasteinrichtung bzw. der Rastelement-Trägereinheit verlaufenden Ebene in einem Winkel von zumindest annähernd 180° zueinander angeordnet sind. Bevorzugt ist hierbei, dass die Rastflächen symmetrisch zur Längsachse ausgebildet sind.

Die vorstehende Ausgestaltung kann am einfachsten dadurch erreicht werden, wenn das erste und/oder zweite Rastelement die Form eines Hammerkopfes aufweist. Um den Verriegelungsvorgang zu erleichtern kann hierbei vorgesehen sein, dass das erste und/oder das zweite Rastelement auf seiner in Verriegelungsrichtung und/oder Entriegelungsrichtung weisenden Seite eine Anfassung besitzt.

Ebenso wie die Rastelemente können auch die Gegenrastelemente unterschiedlich ausgestaltet sein. Eine besonders einfache, jedoch überaus wirksame Ausgestaltung für das erste und/oder zweite Gegenrastelement besteht darin, wenn dieses durch eine Platte gebildet ist, welche für den Durchtritt des ersten bzw. des zweiten Rastelements eine Öffnung aufweist. Besonders vorteilhaft ist es, wenn diese Öffnung die Form eines Langloches besitzt.

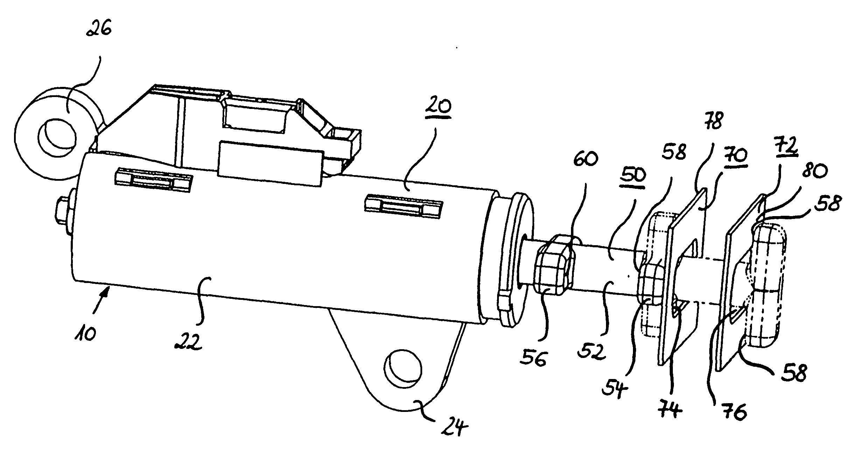

Weitere vorteilhafte Ausgestaltungen sowie ein Ausführungsbeispiel der erfindungsgemäßen Verriegelungsvorrichtung werden nachstehend anhand der beigefügten Zeichnungsfigur erläutert. Hierbei ist zu bemerken, dass sich die während der Beschreibung des Ausführungsbeispiels verwendeten Begriffe "links", "rechts", "unten" und "oben" auf die Ausrichtung der Figur mit normal lesbaren Bezugszeichen beziehen.

In der einzigen Zeichnungsfigur ist eine erfindungsgemäße Verriegelungsvorrichtung in Perspektive dargestellt. Diese kann an einer von zwei nicht weiter dargestellten Rückenlehnen angebracht werden. Die Rückenlehnen sind jeweils einzeln umklappbar und werden in ihrer normalen Betriebsposition durch die erfindungsgemäße Verriegelungsvorrichtung miteinander verriegelt. Die Rückenlehnen können beispielsweise für Vordersitze, insbesondere eines Kraftfahrzeuges, vorgesehen sein.

Die erfindungsgemäße Verriegelungsvorrichtung umfasst eine Rasteinrichtung 10 mit einer Betätigungseinheit 20 sowie einer Rastelement-Trägereinheit 50. Weiterhin enthält die erfindungsgemäße Verriegelungsvorrichtung zwei Rastplatten 70, 72, die identisch ausgebildet sind und von denen jeweils eine an einer der beiden Rückenlehnen angebracht ist.

Die Betätigungseinheit 20 weist ein zylindrisches Gehäuse 22 auf, in dessen Innerem ein nicht weiter dargestellter und nicht weiter bezeichneter Elektromagnet zur Betätigung der Rastelement-Trägereinheit 50 angeordnet ist. Der Elektromagnet ist über nicht weiter dargestellte Verbindungsleitungen mit einer Stromquelle verbunden. In diese Verbindung kann noch eine Steuerung eingeschaltet sein, die die Betätigung des Elektromagneten in Abhängigkeit verschiedener Parameter steuert.

Weiterhin ist das Gehäuse 22 mit Anbringungselementen 24, 26 versehen, mittels denen die Betätigungseinheit 20 zusammen mit der Rastelement-Trägereinheit 50 an einer der beiden Rückenlehnen anbringbar ist. Das eine Anbringungselement 24 wird durch einen unten am Gehäuse 22 vorgesehenen Befestigungslappen gebildet, der einstückig mit dem Gehäuse verbunden ist. Das zweite Anbringungselement 26 ist ebenfalls einstückig mit dem Gehäuse 22 verbunden und an dessen linken hinteren Stirnende vorgesehen, wie dies aus der Figur hervorgeht.

Die Rastelement-Trägereinheit 50 enthält einen kreiszylindrischen Bolzen 52, der mit zwei zueinander beabstandeten Rastelementen 54, 56 versehen ist. Das an dem stirnseitigen Ende des Bolzens 52 vorgesehene Rastelement 54 bildet ein erstes Rastelement, das an seiner zur Betätigungseinheit 20 weisenden Seite jeweils zwei Rastflächen 58 aufweist, die in einer im wesentlichen senkrecht zur Längsachse des Bolzens 52 verlaufenden Ebene zueinander in einem Winkel von 180° symmetrisch angeordnet sind.

Das in einem Abstand zu dem ersten Rastelement 54 angeordnete andere Rastelement 56, das ein zweites Rastelement bildet, weist an seiner zu dem ersten Rastelement 54 weisenden Seite zwei Rastflächen 60 auf, die ebenfalls in einer im Winkel von 90° zur Längsachse des Bolzens 52 verlaufenden Ebene zueinander in einem Winkel von 180° symmetrisch angeordnet sind. Insgesamt besitzen die beiden Rastelemente 54, 56, wie dies aus der einzigen Figur deutlich hervorgeht, jeweils die Form eines Hammerkopfes auf.

Die beiden Rastplatten 72, 70, die ein erstes bzw. zweites Gegenrastelement bilden, besitzen die Form eines Quadrates, in dessen Mitte jeweils ein mit seiner Längsachse horizontal ausgerichtetes Langloch 74, 76 angeordnet ist. Die beiden Rastplatten 70, 72 werden jeweils an den zueinander weisenden Rändern der beiden Rückenlehnen durch geeignete Befestigungsmittel angebracht. Beispielsweise können die beiden Rastplatten 70, 72 an der jeweiligen Rückenlehne angeschweißt sein. Jedes Langloch 74, 76 weist im wesentlichen die Form der beiden Rastelemente 54, 56 auf, so dass wenigstens das erste Rastelement 54 sowohl durch die linke bzw. zweite Rastplatte 70 als auch durch die rechte bzw. erste Rastplatte 72 hindurchtreten kann. Um das Hindurchtreten des ersten Rastelementes 54 durch die beiden Langlöcher 74, 76 zu erleichtern, weist das erste Rastelement 54 an seiner in Richtung der Betätigungseinheit 20 weisenden Seite und an seiner in die entgegengesetzte Richtung weisenden Seite Anfassungen bzw. Abrundungen auf.

Zum Verriegeln der beiden Rückenlehnen mittels der erfindungsgemäßen Verriegelungsvorrichtung wird die Betätigungseinheit 20 in Betrieb genommen, d.h. der Elektromagnet durch Betätigen eines nicht weiter dargestellten Schalters mit einer Stromquelle verbunden. Hierdurch wird die Rastelement-Trägereinheit 50 aus der mit durchgezogenen Linien in der Figur dargestellten Entriegelungsposition, bei der die beiden Rastelemente 54, 56 im wesentlichen mit den Langlöchern 74, 76 der Rastplatten 70, 72 fluchten, in Achsrichtung des Bolzens 52 nach rechts bewegt. Hierdurch tritt das erste Rastelement 54 durch das Langloch 74 der linken Rastplatte 70 und anschließend durch das Langloch 76 der rechten Rastplatte 72 hindurch. Der Abstand der beiden Rastelemente 54, 56 ist dabei so gewählt, dass sich das zweite Rastelement 56 links von der zweiten Rastplatte 70 befindet. Insbesondere ist der Abstand der beiden Rastelemente 54, 56 bzw. der beiden Rastplatten 70, 72 so gewählt, dass die Rastelemente 54, 56 an den Rastplatten 70, 72 anliegen.

Nachdem das erste Rastelement 54 durch die Langlöcher 74, 76 der zweiten und ersten Rastplatte 72, 70 hindurchgetreten ist, wird der Bolzen 52 mittels der Betätigungseinheit 20 um 90° in eine Position verschwenkt, die in der Figur durch Strichpunktlinien dargestellt ist. Durch diese Drehung gelangen die Rastflächen 58 des ersten Rastelements 54 und die Rastflächen 60 des zweiten Rastelementes 56 in Eingriff mit den jeweiligen Gegenrastflächen 78, 80 der Rastplatten 70, 72. Wie aus der Figur hervorgeht weisen dabei die Eingriffspaarungen aus erstem Rastelement 54 und rechter bzw. erster Rastplatte 72 sowie aus zweitem Rastelement 56 und linker bzw. zweiter Rastplatte 70 voneinander weg.

Zum Entriegeln wird wiederum die Betätigungseinheit 20 in Betrieb genommen, d.h. der Elektromagnet wird durch Betätigen eines nicht weiter dargestellten Schalters mit einer Stromquelle verbunden. Der hierfür notwendige Schaltbefehl kann beispielsweise durch in herkömmlicher Weise vorgesehene Seitenverriegelungen der jeweiligen Rückenlehne erzeugt werden. Hierdurch wird der Bolzen 52 zunächst um 90° gedreht. Aufgrund der symmetrischen Ausgestaltung des ersten und des zweiten Rastelements 54, 56 kann diese Drehung sowohl in die gleiche Richtung erfolgen, wie bei der Verriegelung, als auch in eine hierzu entgegengesetzte Richtung. Nach Erreichen einer Position des Bolzens 52, bei der die beiden Rastelemente 54, 56 mit den Langlöchern 74, 76 fluchten, wird der Bolzen 52 zusammen mit den beiden Rastelementen 54, 56 in die Entriegelungsposition, die in der Figur mit ausgezogenen Linien dargestellt ist, zurückgezogen.

### [Bezugszeichenliste]

- 10: Rasteinrichtung
- 20: Betätigungseinheit
- 22: Gehäuse
- 24, 26: Anbringungselement
- 50: Rastelement-Trägereinheit
- 52: kreiszylindrischer Bolzen
- 54: erstes Rastelement
- 56: zweites Rastelement
- 58, 60: Rastflächen
- 70: zweite Rastplatte
- 72: erste Rastplatte
- 74, 76: Langlöcher
- 78, 80: Gegenrastflächen

## Patentansprüche

1. Vorrichtung zum gegenseitigen Verriegeln zweier einzeln klappbarer Rückenlehnen von Sitzen eines Kraftfahrzeuges, mit wenigstens einer Rasteinrichtung (10), die an einer der Rückenlehnen anbringbar ist und die ein erstes Rastelement (54) aufweist, welches aus einer Entriegelungsposition in eine Verriegelungsposition reversibel bewegbar ist und welches beim Verriegeln mit einem ersten Gegenrastelement (72) in Eingriff bringbar ist, das an der anderen Rückenlehne montierbar ist,
**dadurch gekennzeichnet, dass** die Rasteinrichtung (10) ein zweites Rastelement (56) aufweist, welches beim Verriegeln mit einem zweiten Gegenrastelement (70) in Eingriff bringbar ist, das an der die Rasteinrichtung (10) tragenden Rückenlehne montierbar ist.

2. Vorrichtung nach Anspruch 1,
**dadurch gekennzeichnet, dass** die Eingriffspaarungen aus erstem Rastelement (54) und erstem Gegenrastelement (72) sowie aus zweitem Rastelement (56) und zweitem Gegenrastelement (70) voneinander wegweisen.

3. Vorrichtung nach Anspruch 1 oder 2,
**dadurch gekennzeichnet, dass** das erste Rastelement (54) und das zweite Rastelement (56) in Richtung der Längsachse der Rasteinrichtung (10) einen Abstand zueinander aufweisen, der dem Anbringungsabstand des ersten Gegenrastelements (72) zu dem zweiten Gegenrastelement (70) entspricht.

4. Vorrichtung nach einem der Ansprüche 1 bis 3,
**dadurch gekennzeichnet, dass** die Rasteinrichtung (10) eine Rastelement-Trägereinheit (50) und eine Betätigungseinheit (20) aufweist.

5. Vorrichtung nach Anspruch 4,
**dadurch gekennzeichnet, dass** die Rastelement-Trägereinheit (50) durch einen vorzugsweise kreiszylindrischen Bolzen (52) gebildet ist, der mit der Betätigungseinheit (20) in Wirkverbindung steht und an seinem Stirnende das erste Rastelement (54) und an einem Längsabschnitt das zweite Rastelement (56) trägt.

6. Vorrichtung nach Anspruch 4 oder 5,
**dadurch gekennzeichnet, dass** die Betätigungseinheit (20) ein Antriebsmittel aufweist, mittels dem die Rastelement-Trägereinheit (50) zusammen mit den Rastelementen (54, 56) aus der Entriegelungsposition in die Verriegelungsposition reversibel bewegbar ist.

7. Vorrichtung nach Anspruch 6,
**dadurch gekennzeichnet, dass** die Rastelement-Trägereinheit (50) so mit dem Antriebsmittel in Wirkverbindung steht, dass für die Rastelement-Trägereinheit (50) zur Erreichung der Verriegelungsposition zunächst eine Bewegung in Richtung ihrer Längsachse und anschließend eine Bewegung um mindestens 90° um ihre Längsachse reversibel ausführbar ist.

8. Vorrichtung nach Anspruch 6 oder 7,
**dadurch gekennzeichnet, dass** das Antriebsmittel ein Elektromagnet ist.

9. Vorrichtung nach einem der Ansprüche 1 bis 8,
**dadurch gekennzeichnet, dass** das erste und/oder das zweite Rastelement (54, 56) eine erste Rastfläche (58, 60) aufweist, die beim Verriegeln mit mindestens einer an dem ersten und/oder dem zweiten Gegenrastelement (70, 72) vorgesehenen ersten Gegenrastfläche (78, 80) in Eingriff bringbar ist.

10. Vorrichtung nach einem der Ansprüche 1 bis 9,
**dadurch gekennzeichnet, daß** das erste und/oder das zweite Rastelement (54, 56) eine zweite Rastfläche (58, 60) aufweist, die beim Verriegeln mit mindestens einer an dem ersten und/oder zweiten Gegenrastelement (70, 72) vorgesehenen zweiten Gegenrastfläche (78, 80) in Eingriff bringbar ist.

11. Vorrichtung nach Anspruch 9 oder 10,
**dadurch gekennzeichnet, dass** sich die erste und/oder zweite Rastfläche (58, 60) in einem Winkel von zumindest annährend 90° zu der Längsachse der Rasteinrichtung (10) erstrecken.

12. Vorrichtung nach Anspruch 11,
**dadurch gekennzeichnet, dass** die erste und die zweite Rastfläche (58, 60) in einer senkrecht zur Längsachse der Rasteinrichtung (10) verlaufenden Ebene in einem Winkel von zumindest annährend 180° zueinander angeordnet sind.

13. Vorrichtung nach einem der Ansprüche 1 bis 12,
**dadurch gekennzeichnet, dass** das erste und/oder zweite Rastelement (54, 56) die Form eines Hammerkopfes aufweist.

14. Vorrichtung nach einem der Ansprüche 1 bis 13,
**dadurch gekennzeichnet, dass** das erste und/oder das zweite Rastelement (54, 56) auf seiner in Verriegelungsrichtung und/oder Entriegelungsrichtung weisenden Seite eine Anfassung aufweist.

15. Vorrichtung nach einem der Ansprüche 1 bis 14,
**dadurch gekennzeichnet, dass** das erste und/oder zweite Gegenrastelement (70, 72) durch eine Platte gebildet ist, welche für den Durchtritt des ersten bzw. zweiten Rastelements (54, 56) eine Öffnung (74, 76) aufweist, deren Ränder jeweils die Gegenrastfläche (78, 80) bilden.

16. Vorrichtung nach Anspruch 15,
**dadurch gekennzeichnet, dass** die Öffnung (74, 76) die Form eines Langloches aufweist.

## Claims

1. Device for interlocking two individually tiltable backrests of seats of a motor vehicle, with at least one detent mechanism (10) which can be fastened to one of the backrests and comprises a first detent element (54) which can be reversibly moved from a release position into a locking position and, when locking takes place, can be engaged with a first mating detent element (72) which can be mounted at the other backrest,
**characterised in that** the detent mechanism (10) comprises a second detent element (56) which, when locking takes place, can be engaged with a second mating detent element (70) which can be mounted at the backrest bearing the detent mechanism (10).

2. Device according to Claim 1,
**characterised in that** the engagement pairs consisting of the first detent element (54) and the first mating detent element (72) as well as of the second detent element (56) and the second mating detent element (70) are directed away from one another.

3. Device according to Claim 1 or 2,
**characterised in that** the first detent element (54) and the second detent element (56) are arranged at a spacing from one another in the direction of the longitudinal axis of the detent mechanism (10) which corresponds to the spacing between the points at which the first mating detent element (72) and the second mating detent element (70) are fastened.

4. Device according to any one of Claims 1 to 3,
**characterised in that** the detent mechanism (10) comprises a detent element support unit (50) and an actuating unit (20).

5. Device according to Claim 4,
**characterised in that** the detent element support unit (50) is formed by a preferably circular cylindrical bolt (52) which is operatively connected to the actuating unit (20) and bears the first detent element (54) at its front end and the second detent element (56) at a longitudinal portion.

6. Device according to Claim 4 or 5,
**characterised in that** the actuating unit (20) comprises a drive means by means of which the detent element support unit (50) can be reversibly moved together with the detent elements (54, 56) from the release position into the locking position.

7. Device according to Claim 6,
**characterised in that** the detent element support unit (50) is operatively connected to the drive means such that the detent element support unit (50) can initially execute a movement in the direction of its longitudinal axis and then a movement through at least 90° about its longitudinal axis in a reversible manner in order to reach the locking position.

8. Device according to Claim 6 or 7,
**characterised in that** the drive means is an electromagnet.

9. Device according to any one of Claims 1 to 8,
**characterised in that** the first and/or the second detent element (54, 56) comprise(s) a first detent face (58, 60) which can be engaged with at least one first mating detent face (78, 80) provided at the first and/or the second mating detent element (70, 72) when locking takes place.

10. Device according to any one of Claims 1 to 9,
**characterised in that** the first and/or the second detent element (54, 56) comprise(s) a second detent face (58, 60) which can be engaged with at least one second mating detent face (78, 80) provided at the first and/or second mating detent element (70, 72) when locking takes place.

11. Device according to Claim 9 or 10,
**characterised in that** the first and/or second detent face (58, 60) extend(s) at an angle of at least approximately 90° to the longitudinal axis of the detent mechanism (10).

12. Device according to Claim 11,
**characterised in that** the first and the second detent face (58, 60) are arranged at an angle of at least approximately 180° relative to one another in a plane extending perpendicularly to the longitudinal axis of the detent mechanism (10).

13. Device according to any one of Claims 1 to 12,
**characterised in that** the first and/or second detent element (54, 56) are/is formed like a hammer head.

14. Device according to any one of Claims 1 to 13,
**characterised in that** the first and/or the second detent element (54, 56) is bevelled on its side which is directed in the locking direction and/or release direction.

15. Device according to any one of Claims 1 to 14,
**characterised in that** the first and/or second mating detent element (70, 72) is formed by a plate which comprises an opening (74, 76) for the passage of the first or second detent element (54, 56), the edges of the opening respectively forming the mating detent face (78, 80).

16. Device according to Claim 15,
**characterised in that** the opening (74, 76) is in the form of an elongate hole.

## Revendications

1. Dispositif de verrouillage réciproque de deux dossiers rabattables individuellement pour sièges de véhicule automobile, avec au moins un organe d'encliquetage (10), que l'on peut fixer sur l'un des dossiers et qui présente un premier élément d'encliquetage (54) mobile de façon réversible d'une position de déverrouillage vers une position de verrouillage et susceptible lors du verrouillage de se mettre en prise avec un premier élément d'encliquetage opposé (72), que l'on peut installer sur l'autre dossier, **caractérisé en ce que** l'organe d'encliquetage (10) présente un second élément d'encliquetage (56) qui est susceptible de venir en prise avec un second élément d'encliquetage opposé (70) lors du verrouillage, élément que l'on peut monter sur le dossier portant l'organe d'encliquetage (10).

2. Dispositif selon la revendication 1, **caractérisé en ce que** les paires d'engagement en prise composées d'un premier élément d'encliquetage (54) et d'un premier élément d'encliquetage opposé (72) ainsi que d'un second élément d'encliquetage (56) et d'un second élément d'encliquetage opposé (70), s'écartent l'une de l'autre.

3. Dispositif selon la revendication 1 ou 2, **caractérisé en ce que** le premier élément d'encliquetage (54) et le second élément d'encliquetage (56) présentent l'un par rapport à l'autre une distance dans le sens de l'axe longitudinal de l'organe d'encliquetage (10), distance correspondant à la distance de montage du premier élément d'encliquetage opposé (72) par rapport au second élément d'encliquetage opposé (70).

4. Dispositif selon l'une des revendications 1 à 3, **caractérisé en ce que** l'organe d'encliquetage (10) présente une unité support d'élément d'encliquetage (50) et une unité d'actionnement (20).

5. Dispositif selon la revendication 4, **caractérisé en ce que** l'unité support d'élément d'encliquetage (50) est constituée d'une broche (52), de préférence cylindrique circulaire, qui se trouve en liaison mécanique avec l'unité d'actionnement (20) et porte à son extrémité frontale le premier élément d'encliquetage (54) et sur un tronçon longitudinal le second élément d'encliquetage (56).

6. Dispositif selon la revendication 1 ou 5, **caractérisé en ce que** l'unité d'actionnement (20) présente un moyen d'entraînement grâce auquel l'unité support (50) d'élément d'encliquetage en combinaison avec les éléments d'encliquetage (54, 56) est susceptible de se déplacer de façon réversible de la position de déverrouillage à la position de verrouillage

7. Dispositif selon la revendication 6, **caractérisé en ce que** l'unité support (50) d'élément d'encliquetage qui se trouve en liaison mécanique avec le moyen d'entraînement pour déplacer, de façon réversible, l'unité support (50) d'élément d'encliquetage d'abord dans le sens de son axe longitudinal, pour atteindre la position de verrouillage, et ensuite la déplacer au moins de 90° autour de son axe longitudinal.

8. Dispositif selon la revendication 6 ou 7, **caractérisé en ce que** le moyen d'entraînement est un électroaimant.

9. Dispositif selon l'une des revendications 1 à 8, **caractérisé en ce que** le premier et/ou le second élément d'encliquetage (54, 56) présente une première surface d'encliquetage (58, 60) susceptible lors du verrouillage de venir en prise avec au moins une première des surfaces d'encliquetage opposées (78, 80) prévues au niveau du premier élément d'encliquetage opposé et/ou du second élément d'encliquetage opposé (70, 72).

10. Dispositif selon l'une des revendications 1 à 9, **caractérisé en ce que** le premier élément d'encliquetage et/ou le second élément d'encliquetage (54, 56) présente une seconde surface d'encliquetage (58, 60) susceptible lors du verrouillage de venir en prise avec au moins une seconde surface d'encliquetage opposée (78, 80) prévues au niveau du premier élément d'encliquetage opposé et/ou du second élément d'encliquetage opposé (70, 72).

11. Dispositif selon la revendication 9 ou 10, **caractérisé en ce que** la première surface d'encliquetage et/ou la seconde surface d'encliquetage (58, 60) s'étend sur un angle d'au moins approximativement 90° par rapport à l'axe longitudinal de l'organe d'encliquetage (10).

12. Dispositif selon la revendication 11, **caractérisé en ce que** la première et la deuxième surface d'encliquetage (58, 60) sont agencées en décrivant un angle d'au moins environ 180° l'une par rapport à l'autre, dans un plan courant perpendiculairement à l'axe longitudinal de l'organe d'encliquetage (10).

13. Dispositif selon l'une des revendications 1 à 12, **caractérisé en ce que** le premier élément d'encliquetage et/ou le second élément d'encliquetage (54, 56) présente la forme d'une tête de marteau.

14. Dispositif selon l'une des revendications 1 à 13, **caractérisé en ce que** le premier élément d'encliquetage et/ou le second élément d'encliquetage (54, 56) présente, sur sa face orientée dans le sens de verrouillage et/ou dans le sens de déverrouillage, un biseau.

15. Dispositif selon l'une des revendications 1 à 14, **caractérisé en ce que** le premier et/ou le second éléments d'encliquetage opposés (70, 72) sont constitués d'une plaque présentant, pour le passage traversant du premier élément d'encliquetage ou bien du second élément d'encliquetage (54, 56), une ouverture (74, 76) dont les bords constituent respectivement la surface d'encliquetage opposée (78, 80).

16. Dispositif selon la revendication 15, **caractérisé en ce que** l'ouverture (74, 76) a une forme de trou oblong.
